# EUROPEAN PATENT SPECIFICATION

(11) **EP 3 357 995 B1**
(45) Date of publication and mention of the grant of the patent: **08.07.2020**
(21) Application number: 18000099.4
(22) Date of filing: 06.02.2018
(51) Int. Cl.: C12C 11/00, C12G 1/02, C12G 1/06, C12C 7/14, C12H 1/06

(54) **PROCESS AND APPARATUS FOR THE PRODUCTION OF FERMENTED BEVERAGES**
VERFAHREN UND VORRICHTUNG ZUR HERSTELLUNG VON FERMENTIERTEN GETRÄNKEN
PROCEDE ET APPAREIL POUR LA FABRICATION DE BOISSONS FERMENTEES

(30) Priority: 06.02.2017 IT 201700012734; 06.02.2017 IT 201700012749
(43) Date of publication of application: 08.08.2018
(73) Proprietor: Capello, Elia, 12030 Cavallermaggiore (CN) (IT)
(72) Inventor: Capello, Elia, 12030 Cavallermaggiore (CN) (IT)
(74) Representative: Marchitelli, Mauro

(56) References cited:
- WO-A1-89/08698
- FR-A- 1 048 951
- FR-A- 1 269 956
- FR-A1- 2 540 839
- FR-A1- 2 596 768
- FR-A3- 2 755 974

## Description

The present invention is strictly defined by the claims and relates to an apparatus for the production of fermented or re-fermented beverages, with or without the presence of carbon dioxide and a related procedure using the claimed apparatus.

More specifically, the present invention relates to an apparatus as defined in claims 1 to 9, and a related procedure using the claimed apparatus, for the production of fermented or re-fermented beverages, with or without the presence of carbon dioxide, the apparatus comprising an autoclave extending in a horizontal direction, the side wall of which has at least two wall parts with curved inner surfaces and an internal bottom zone below said at least two wall parts, wherein are performed at least the operations of filling the autoclave at least partially with fermentable liquid, fermentation or refermentation of said liquid and sedimentation of so-called lees. An apparatus of the type described is known from document FR 1048951 A and comprises an autoclave extending in an essentially horizontal direction, the side wall of which has at least two side wall parts with curved inner surfaces and an internal bottom zone below said at least two side wall parts, wherein are performed at least the operations of filling the autoclave at least partially with fermentable liquid, fermentation or refermentation of said liquid and sedimentation of so-called lees. Mobile movement means are also provided, external to said autoclave, configured to cause the movement of a part of the lees inside the autoclave, and movement control means for said mobile movement means, configured to move said mobile movement means from outside the autoclave. WO 89/08698 A discloses an apparatus for the production of red wine, comprising a cylindrical autoclave with a horizontal longer axis and a bottom zone. The autoclave comprises an agitator which includes a shaft with plate-like agitating arms radially protruding from the shaft and scraping brushing means fitted closely against the inner wall of the autoclave, for lees movement. FR 2 755 974 A3 discloses an apparatus for wine making comprising a horizontal fermentation tank with curved side-walls and an internal bottom zone for the accumulation of the fermentation lees. A shaft is fixed in the tank and radial arms are integral with the shaft. The radial arms are provided at their ends with blades for dragging the lees. The lees movement system is useful in the fermentation and refinement phase, when the aim is to agitate the lees and keep them in suspension; nevertheless, it presents drawbacks when it comes to the more complex, delicate and important phase of the procedure: sedimentation of the lees. The lees, which tend to deposit on the bottom of the autoclave during a rest period, are easily dispersed and carried into suspension. The oscillation created by the movement system according to FR 1048951 A during the lees sedimentation phase, even if performed at a low speed, creates turbulence in the liquid mass, thereby preventing the correct deposit and the correct division of the lees from the clear part.

An object of the present invention is to provide a procedure for the production of fermented or re-fermented beverages, with or without the presence of carbon dioxide, that enables the drawbacks described above to be resolved.

Another object of the present invention is to provide an apparatus for the production of fermented or re-fermented beverages, with or without the presence of carbon dioxide, for actuating the afore-mentioned procedure and enabling the drawbacks described above to be resolved.

In view of these objects, the present invention provides an apparatus and a related procedure for the production of fermented or re-fermented beverages, with or without the presence of carbon dioxide, as defined in claims 1-9 and 10, respectively.

In particular, the procedure for the production of fermented or re-fermented beverages, with or without the presence of carbon dioxide, is actuated in an autoclave as defined in at least claim 1.

Furthermore, the afore-mentioned procedure comprises at least one phase consisting of collecting at least part of the lees, towards said internal bottom zone, by means of dragging the lees, from the top to the bottom only, by means of said mobile dragging means simultaneously along said curved inner surfaces of said at least two side wall parts.

Moreover, the afore-mentioned procedure comprises a plurality of phases, each consisting of gathering at least part of the lees, towards said internal bottom zone, by means of dragging the lees, from the top to the bottom only, by means of said mobile dragging means, simultaneously along said curved inner surfaces of said at least two side wall parts, where said mobile dragging means are made to move, from the top to the bottom, bringing them ever closer, in successive phases, to said internal bottom zone.

In particular, the procedure according to the invention, comprising a refinement phase, comprises, during said refinement phase, at least one operation of dragging at least part of the lees, which are moved from the bottom to the top, simultaneously along said curved inner surfaces of said at least two side wall parts, by means of said mobile dragging means moved by said control means.

Other characteristics and advantages of the invention will become apparent from the following detailed description of an example of an embodiment of the invention with reference to the accompanying drawings, which shows important details for the invention, and from the claims.

The characteristics illustrated are not necessarily to scale and are represented so that the specific features according to the invention are clearly highlighted.

In the drawings:
- Figure 1 shows a side view of the apparatus for the production of fermented or re-fermented beverages, with or without the presence of carbon dioxide, according to a first example of an embodiment of the present invention, including an autoclave with essentially cylindrical walls with a horizontal axis;
- Figure 2 shows a front view in the direction of arrow II shown in Figure 1;
- Figure 3 shows a sectional view along the line III-III shown in figure 1, illustrating two frames rotating around said axis of the autoclave and relative organs for brushing the internal wall of the autoclave, in a position turned upwards;
- Figure 4 shows a detailed view in a larger scale of detail IV shown in figure 3;
- Figure 5 is a view similar to that shown in figure 3, but where said two frames with respective brushing organs are shown rotated thru around 180 degrees, with respect to said figure 3;
- Figure 6 shows a sectional view along the deviated line VI-VI shown in Figure 3;
- Figures 7 and 8 show detailed views, in enlarged scale, of details VII and VIII shown in Figure 6, respectively;
- Figure 9 shows a sectional view in enlarged scale along the line IX-IX shown in Figure 3;
- Figure 10 shows a sectional view along the line X-X shown in Figure 9;
- Figure 11 shows a sectional partial view in enlarged scale along the line XI-XI shown in Figure 2;
- Figure 12 shows a view similar to that shown in figure 3, but illustrating a variant of an embodiment of said rotating frames with respective brushing organs;
- Figure 13 shows a sectional view along the deviated line XIII-XIII shown in Figure 12;
- Figure 14 shows a view similar to that shown in figure 12, but wherein said two rotating frames with respective brushing organs are illustrated rotated thru an angle of around 180 degrees, with respect to said figure 12;
- Figure 15 shows a detailed view in larger scale of detail XV shown in figure 14;
- Figure 15A shows a view similar to that shown in figure 15, but wherein said rotating frames with respective brushing organs are illustrated further apart from one another than shown in figure 15;
- Figure 16 shows a sectional view in larger scale along the line XVI-XVI shown in Figure 2;
- Figure 17 shows a detailed view in larger scale, in the direction of the arrow XVII shown in figure 2;
- Figure 18 shows a view similar to that shown in figure 5, but illustrating a further variant of an embodiment of said rotating frames with respective brushing organs;
- Figure 19 shows a detailed view in larger scale of lower part of Figure 18;
- Figure 20 shows a side elevated view of the apparatus according to a second example of embodiment of the present invention, including an autoclave having a wall with an essentially elliptical cross-section, squeezed at the bottom and at the top corresponding to the shorter axis of said cross-section, and having two essentially horizontal longitudinal axes at the respective focal points of said section;
- Figure 21 shows a front view in the direction of the arrow XXI shown in Figure 20;
- Figure 22 shows a longitudinal sectional view along the line XXII-XXII shown in Figure 20;
- Figure 23 shows a cross-section view along the line XXIII-XXIII shown in figure 20, illustrating two frames rotating around respective axes of the autoclave and relative organs for brushing the inner wall of the autoclave, in a position turned upwards;
- Figure 24 is a view similar to that shown in figure 23, but wherein the two rotating frames and relative brushing organs are illustrated in a position turned downwards, with respect to said axes;
- Figure 25 shows a sectional view along the line XXV-XXV shown in Figure 23. The invention is defined by claims 1 to 10.

First example of an embodiment of the apparatus for the production of fermented or re-fermented beverages, with or without the presence of carbon dioxide.

Said apparatus is indicated as a whole by the reference number 10' and comprises an autoclave 10, which is well known and is therefore not described in detail herein.

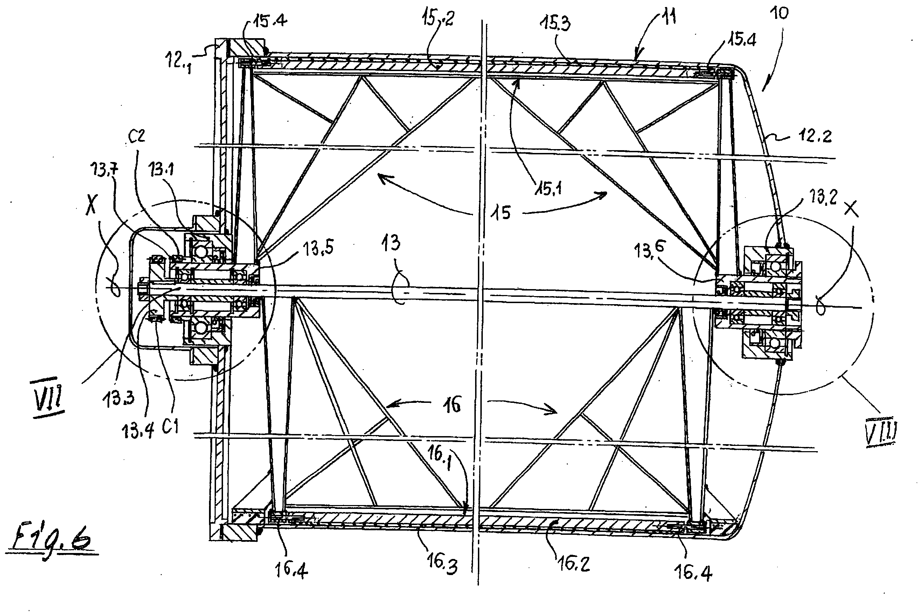

Said autoclave 10 has an essentially cylindrical side wall 11 with a horizontal axis X-X (Fig. 6). A front cover 12.1 and a back wall 12.2 close said autoclave 10 hermetically.

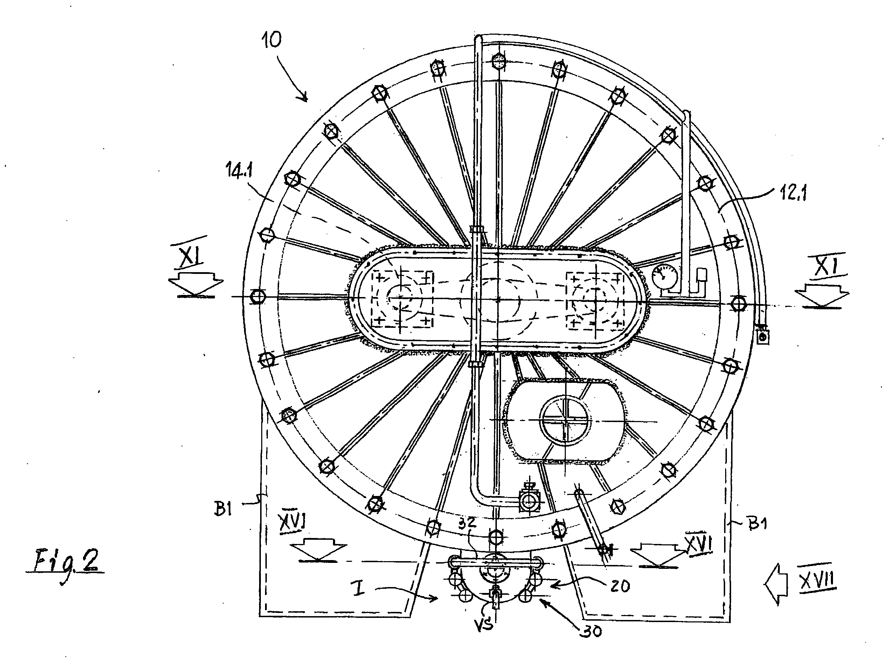

Said autoclave 10 is supported by a solid base B, formed of supporting feet B1 resting on the ground, which keep said side wall 11 raised off the ground and form therewith and between one another, a free gap I (Figure 2).

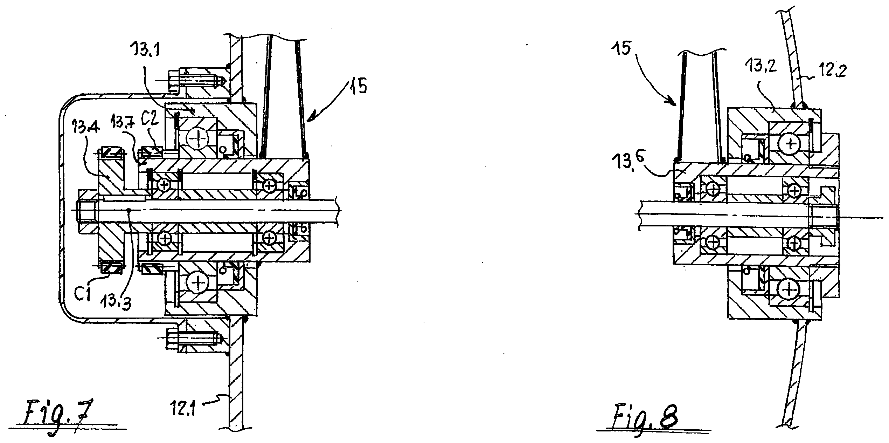

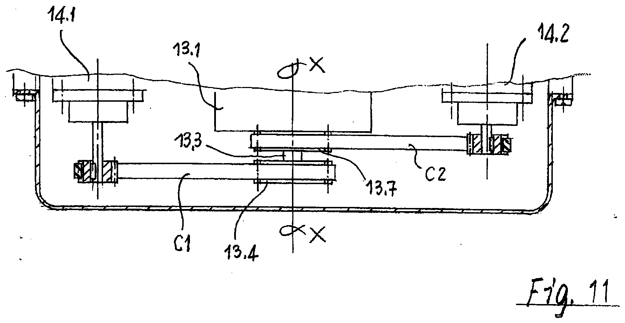

An axial shaft 13 is rotatingly supported with respect to said cover 12.1 and to said back wall 12.2 by means of respective first axial supporting and sealing sleeves 13.1, 13.2, provided with corresponding bearings and sealing means against leakage of liquids towards the exterior of the autoclave (Figures 6, 7, 8). An axial end 13.3 of the shaft 13 protrudes on the outside of the cover 12.1 and supports a first fixed, coaxial toothed wheel 13.4, kinematically connected by means of a corresponding toothed belt C1 with a toothed wheel integral with the output shaft of a first gear motor 14.1 supported on the outside of the cover 12.1, said output shaft having an axis parallel to axis X-X (Figure 2, 11).

Moreover, on said shaft 13 and partially inside of said first axial sleeves 13.1, 13.2 are arranged respective second supporting and sealing axial sleeves 13.5, 13.6, front and back sleeves respectively, provided with corresponding bearings and sealing means against leakage of liquids (Figures 6, 7, 8). Said second sleeves 13.5, 13.6 are fitted in a rotating manner with respect to the shaft 13 and the second front sleeve 13.5, with a portion thereof protruding partially beyond the front cover 12.1, supports a second fixed coaxial toothed wheel 13.7. Said second toothed wheel 13.7 is kinematically connected, by means of a corresponding toothed belt C2, with a toothed wheel integral with the output shaft of a second gear motor 14.2 supported on the outside of the cover 12.1, said output shaft having an axis parallel to axis X-X (Figures 2, 11).

The transmission ratio between the output of the first gear motor 14.1 and the toothed wheel 13.4 is the same as the transmission ratio between the output of the second gear motor 14.2 and the toothed wheel 13.7, but said gear motors turn in mutually opposite directions. Furthermore, said gear motors 14.1, 14.2 are provided with respective inverter means to vary their rotation speed. Said gear motors 14.1, 14.2 can rotate in a clockwise and anti-clockwise direction.

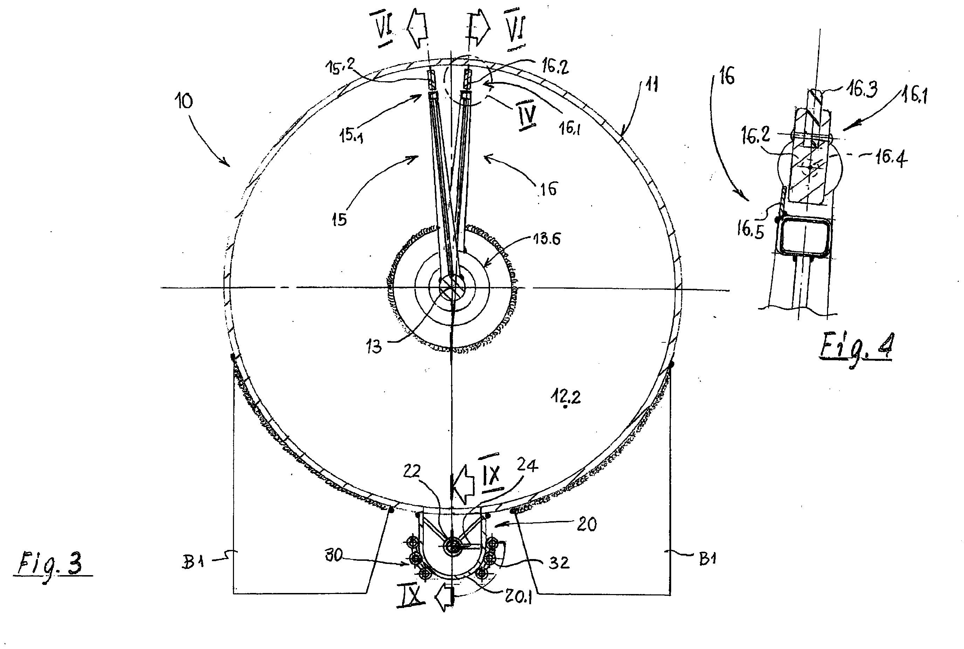

Said shaft 13 supports a first fixed, planar, rigid frame 15, substantially contained in a plane passing through the axis X-X and shaped essentially as a lattice, which extends radially to near the inner surface of the side wall 11 of the autoclave 10. Said first planar frame 15, near the inner surface of said side wall 11, supports a first oscillating linear brushing organ 15.1 (Figures 3, 4, 5, 6), extending substantially for the entire length of the wall. Said first linear brushing organ 15.1 comprises a linear slat 15.2 connected to said planar frame 15, and a linear blade or flexible spatula 15.3, supported by said slat 15.2 substantially for the entire length of the slat.

It will be noted that said linear slat 15.2 is connected to said planar frame 15 in a manner oscillating around an axis parallel to said axis X-X, by means of a pair of coaxial end pins 15.4 (figure 6). Moreover, a rigid fin (not illustrated) fixed to said planar frame 15 is placed against a face of said linear slat 15.2, in an arrangement such that said rigid fin, acting against the oscillation, keeps said linear slat 15.2 co-planar with the frame 15, when the latter oscillates from the top towards the bottom around the axis X-X. In this condition, said linear blade or flexible spatula 15.3 is supported by means of said slat 15.2 in contact (almost grazing, respectively sliding) with respect to the inner surface of said wall 11 and substantially for the entire length of the wall.

Moreover, during the rotation of said frame 15 in the opposite direction around the axis X-X, said slat 15.2, on the contrary, is free to oscillate around the axis of the pins 15.4 and, due to the resistance offered by the liquid present in the autoclave, it moves to a position that is angularly oscillated with respect to the frame 15 for a better fluid-dynamic penetration into the liquid. Therefore, in this oscillated position, said slat 15.2 of the brushing organ 15.1 does not directly drag the lees along a corresponding part of the inner surface of the side wall 11 of the autoclave 10.

Furthermore, said second sleeves 13.5, 13.6 support a second fixed, planar rigid frame 16, substantially contained in a plane passing through the axis X-X and shaped essentially as a lattice, which extends radially to near the inner surface of the side wall 11 of the autoclave 10. Said second planar frame 16 near the inner surface of said side wall 11, supports a second oscillating linear brushing organ 16.1 (Figures 3, 4, 5, 6), extending substantially for the entire length of the wall. Said second linear brushing organ 16.1 comprises a linear slat 16.2 connected to said planar frame 16, and a linear blade or flexible spatula 16.3, supported by said slat 16.2 substantially for the entire length of the slat.

It will be noted that said linear slat 16.2 is connected to said planar frame 16 in a manner oscillating around an axis parallel to said axis X-X, by means of a pair of coaxial end pins 16.4 (Figure 6). Moreover, a rigid fin 16.5 (Figure 4), fixed to said planar frame 16, is placed against a face of said linear slat 16.2, in an arrangement such that said rigid fin 16.5, acting against the oscillation, keeps said linear slat 16.2 co-planar with the frame 16, when the latter oscillates from the top towards the bottom around the axis X-X. In this condition, said linear blade or flexible spatula 16.3 is supported by means of said slat 16.2 in contact (almost grazing, respectively sliding) with respect to the inner surface of said wall 11 and substantially for the entire length of the wall.

Moreover, during the rotation of said frame 16 in the opposite direction around the axis X-X, said slat 16.2, on the other hand, is free to oscillate around the axis of the pins 16.4 and, due to the resistance offered by the liquid present in the autoclave, it moves to a position that is angularly oscillated with respect to the frame 16 for a better fluid-dynamic penetration into the liquid. Therefore, in this oscillated position, said slat 16.2 of the brushing organ 16.1 does not directly drag the lees along a corresponding part of the inner surface of the side wall 11 of the autoclave 10.

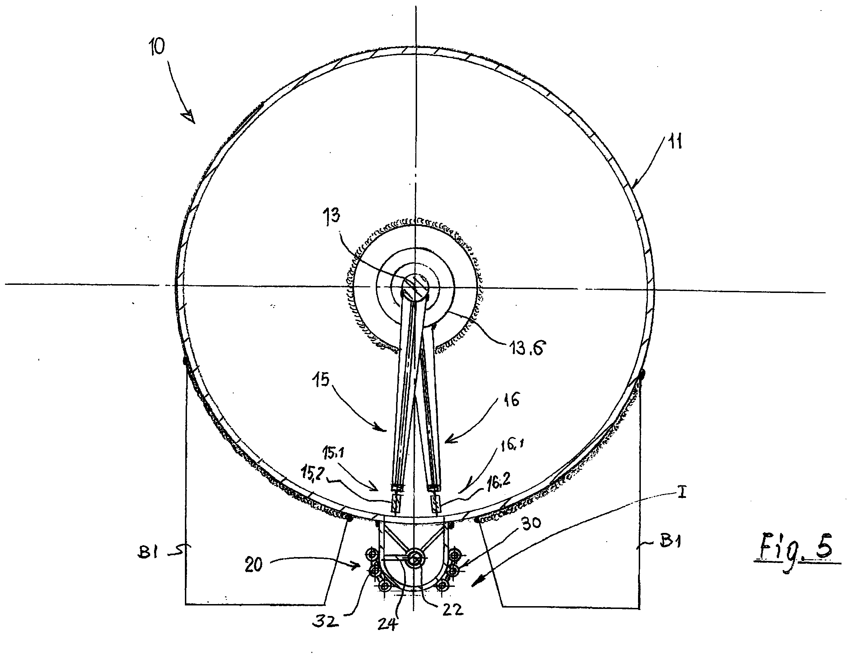

It will also be noted that, from observation of the sectional views shown in figures 3 and 5, said planar frames 15, 16 and the respective linear brushing organs 15.1, 16.1 have a relative compass-like movement and are driven by the respective gear motors 14.1, 14.2, so that they each sweep a respective circumference arc substantially approaching and not greater than 180°. The arrangement of the parts and the relative controls are such that, operationally, each of said linear brushing organs 15.1, 16.1 drags a respective linear blade or flexible spatula 15.3, 16.3, causing it to make an angular oscillation, of an amplitude not greater than 180°, along one corresponding surface of two opposing inner lateral semi-surfaces of said side wall 11, which are separated by the longitudinal vertical midplane of said autoclave 10. In particular, the planar frames 15, 16 bring the respective linear brushing organs 15.1, 16.1 to oscillate in mutually convergent directions, when they are rotated around the axis X-X from the top towards the bottom, in the bottom part of the autoclave 10.

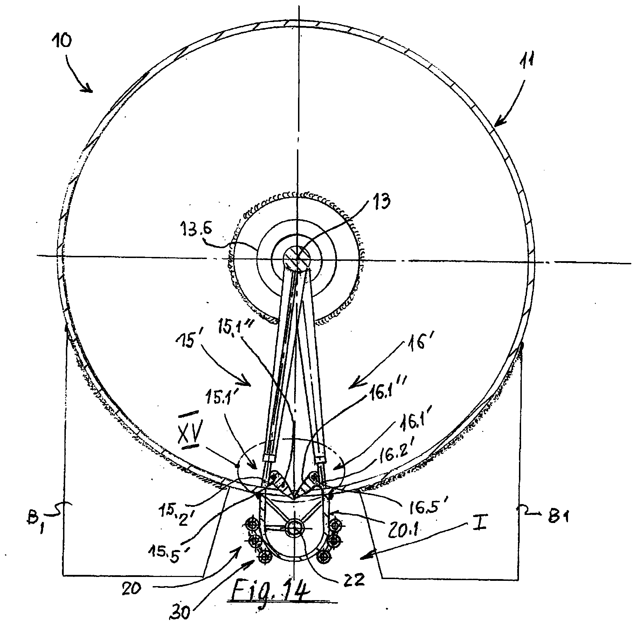

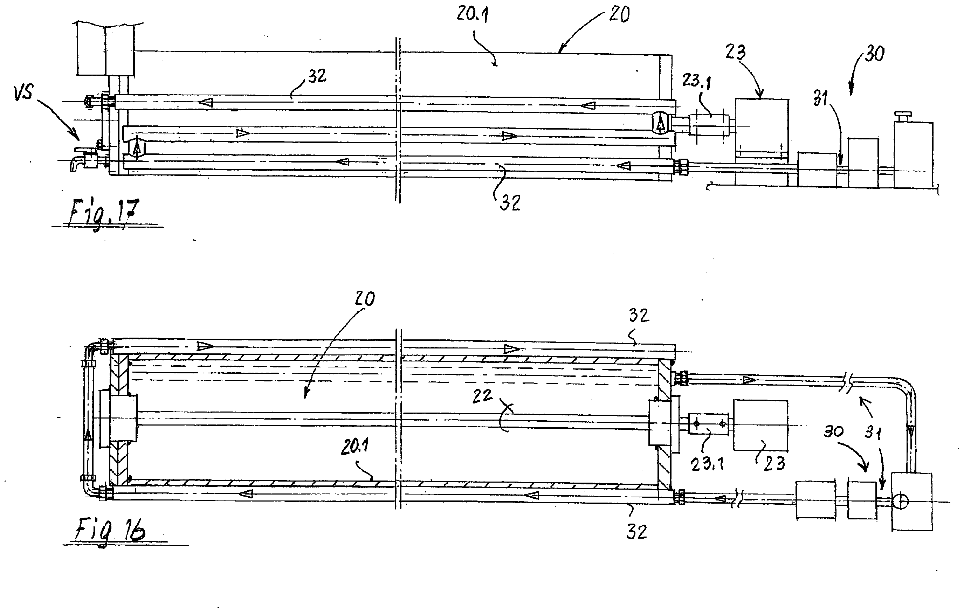

In the gap I of the base B, the bottom zone of the autoclave 10 projects downwards, where the inner side wall 11 is shaped as a longitudinal channel 20.1, opening towards the inside of the autoclave 10 and extending symmetrically with respect to the longitudinal vertical midplane of the autoclave 10 (figures 3, 5, 9, 12, 14, 16, 17, 18, 19). It will be noted that said bottom channel 20.1 communicates with the inside of the autoclave 10 substantially for all its length.

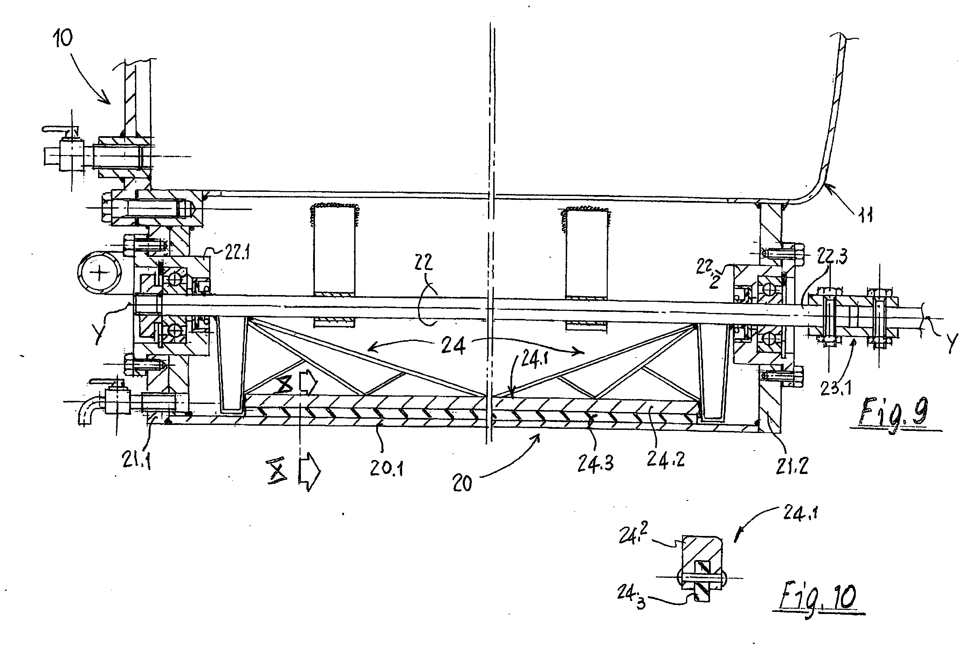

Said bottom channel 20.1 has a substantially semi-circular cross section (Figures 3, 5) and, correspondingly it comprises a substantially semi-cylindrical side wall, with a corresponding axis of symmetry Y-Y parallel to the axis X-X of the side wall 11 of the autoclave 10 (Fig. 9).

A front cover 21.1 and a back cover 21.2 close said bottom channel 20.1 hermetically (Fig. 9).

A shaft 22, coaxial to the axis Y-Y, is rotatingly supported with respect to said covers 21.1, 21.2 by means of respective axial supporting and sealing sleeves 22.1, 22.2, provided with bearings and corresponding sealing means against leakage of liquids to the exterior of the covers (Figure 9).

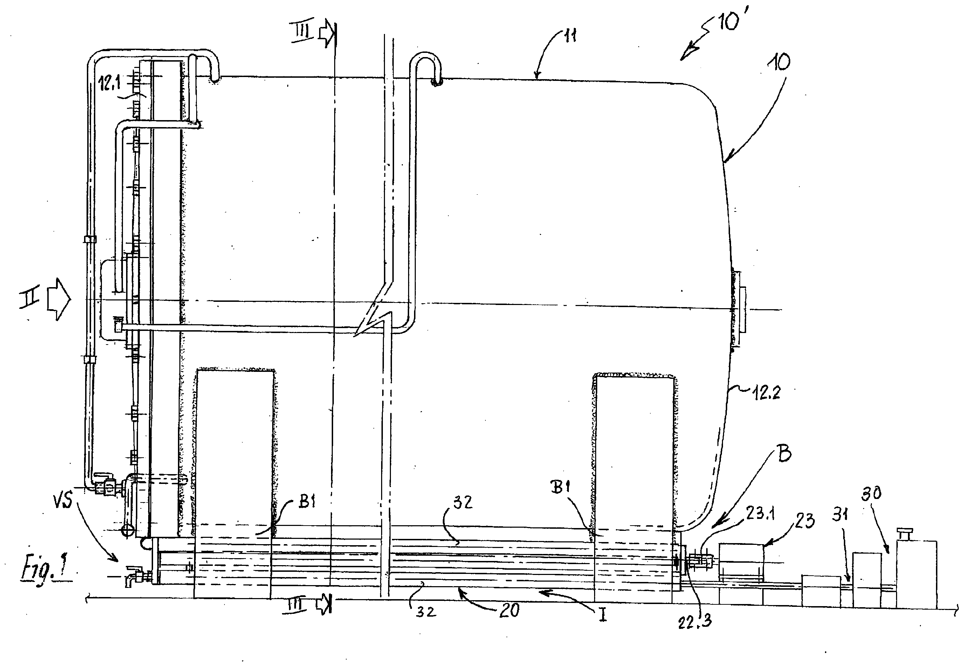

An axial end 22.3 of the shaft 22 protrudes on the outside of the back cover 21.2 and is coupled in a detachable manner, by means of a joint 23.1, with an external gear motor 23 supported off the ground by the output shaft with an axis parallel to the axis Y-Y (Figures 1, 9). Said gear motor 23 may be provided with inverter means to vary rotation speed. Said gear motor 23 can rotate in a clockwise and anti-clockwise direction.

Said shaft 22 supports a fixed, planar, rigid frame 24, substantially contained in a plane passing through the axis Y-Y and shaped essentially as a lattice, which extends radially to near the inner surface of the essentially semi-cylindrical side wall of the bottom channel 20.1. Said planar frame 24, near the inner surface of said side wall, supports a linear brushing organ 24.1 (Figures 9, 10), fixed and extending substantially for the entire length of the wall. Said linear brushing organ 24.1 comprises a linear slat 24.2 fixed to said planar frame 24, and a linear blade or flexible spatula 24.3, supported by said slat 24.2 in a condition almost of contact with the inner surface of said wall and substantially for the entire length of the wall.

It will be noted that, with reference for example to the sectional views shown in figures 3, 5 and 14, said planar frame 24 and the respective linear brushing organ 24.1 are provided so as to sweep a circumference arc substantially approaching and not greater than 180°. In this manner, said linear brushing organ 24.1 can cause the respective linear blade or flexible spatula 24.3 to perform an angular translation of the same amplitude along substantially the entire inner side surface of said semi-cylindrical side wall of the bottom channel 20.1.

According to the preceding description, the blades 15.3, 16.3, 24.3 of the brushing organs are arranged in contact with the inner surface of the side wall 11 of the autoclave 10. This arrangement is herein defined as a "sliding" brushing arrangement, in other words with contact made with said side surface of the side wall 11 of the autoclave 10. Nevertheless, in a variant, said blades 24.3, 16.3, 15.3 may be arranged in "almost grazing" contact, in other words not in direct contact with said side surface of the side wall 11 of the autoclave 10. With reference, for example, to the slat 15.2 of the brushing organ 15.1 oscillating with respect to the frame 15 around the pins 15.4, it will be noted that it can be configured (according to a variant not illustrated) so as to oscillate out of service (in a non-operational position), or to maintain an operating position, during movement of said first dragging means from the bottom towards the top, by remote control means, for example by means of electro-magnets.

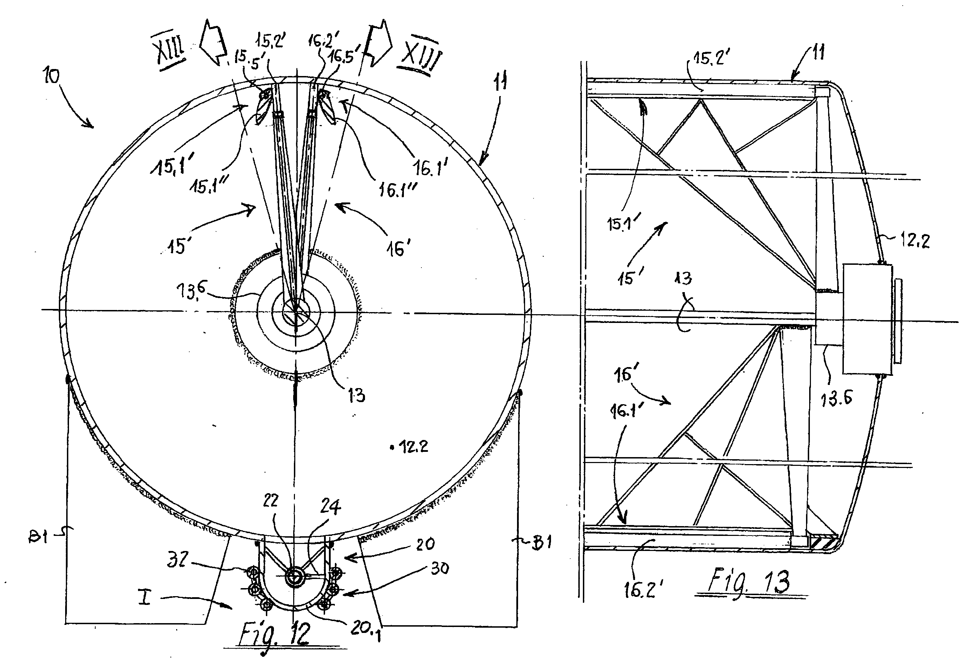

### Variant of an embodiment according to figures 12, 13, 14, 15, 15A

This variant of an embodiment relates, in particular, to the structure of said first and second linear brushing organs, supported at the free ends of said first and second planar frames oscillating with respect to the axis X-X of the autoclave 10. With reference to figures 12, 13, 14, 15, 15A shown in the drawings, relating to said variant, said first and second linear brushing organs are indicated by the reference numbers 15.1' and 16.1' respectively, while said first and second frames are indicated by the reference numbers 15' and 16' respectively. Otherwise, in the said figures the reference numbers used for structural parts similar to those illustrated in the other figures shown in the drawings of the autoclave 10, are unchanged. Said first and second planar frames 15' and 16', near the inner surface of said side wall 11 of the autoclave 10, support said first and second linear brushing organs 15.1', 16.1', which are fixed to said frames and extend substantially for the entire length of the wall.

Said first and second linear brushing organs 15.1', 16.1' comprise respective linear slats 15.2', 16.2' fixed in a co-planar manner to the respective planar frame 15', 16', substantially for the entire length of the wall.

Said linear slats 15.2', 16.2' are kept in almost grazing contact with the inner surface of the side wall 11 of the autoclave 10.

According to present invention, the brushing organs with relative blades can be either of a sliding type or almost grazing type, in other words said organs perform brushing in contact (sliding) or not in contact (almost grazing) with respect to at least one part of the inner surface of the side wall of the autoclave.

In the examples shown, the organs 15.2', 16.2' are almost grazing brushing organs (figure 12), while the organs 15.3, 16.3, 24.3 are sliding brushing organs (figures 3, 4).

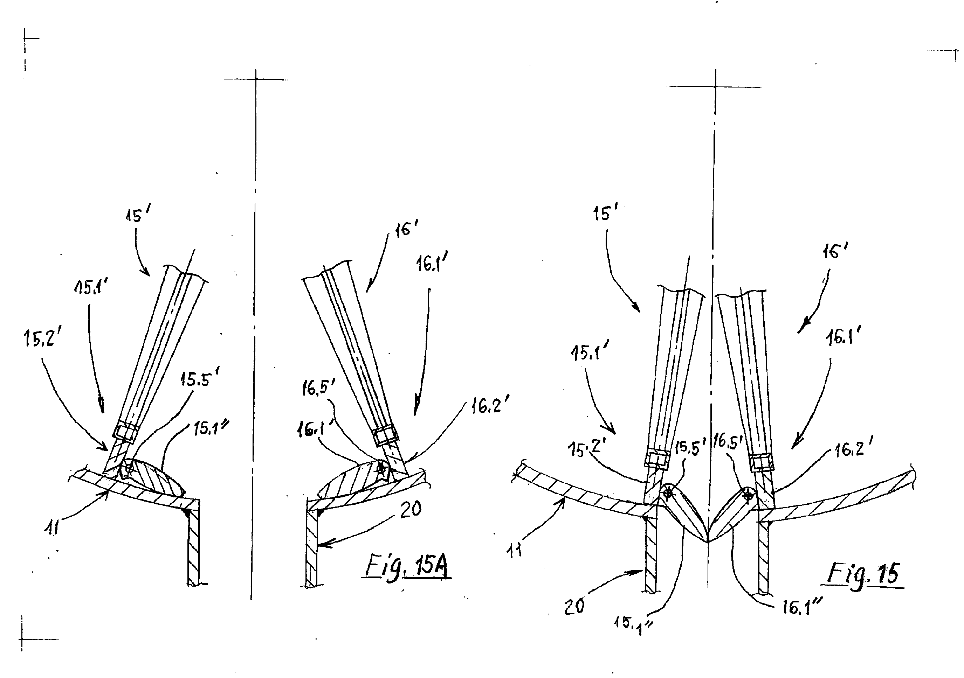

Each linear slat 15.2', 16.2' supports a respective freely oscillating fin 15.1", 16.1", connected at the side to the slat by means of a respective cylindrical articulation with pin 15.5', 16.5' and an axis parallel to said axis X-X. Said fins 15.1", 16.1" are moved integrally with said first and second planar frames 15', 16'. In particular, in the example shown, said oscillating fins 15.1", 16.1" are respectively articulated to the side faces of said linear slats 15.2', 16.2' which, in the position where the planar frames 15', 16' are oscillated downwards near the bottom channel 20.1 (figures 15, 15A), they are mutually opposite one another. By means of this arrangement, when the corresponding linear slats 15.2', 16.2' are arranged on the inner surface of the side wall 11 near the longitudinal edges of the bottom channel 20.1, said oscillating fins 15.1", 16.1" are partially overturned by gravity, around the respective pins 15.5', 16.5', with the respective free ends inside said channel 20.1 and mutually juxtaposed against one another (fig. 15) thereby forming an upper closing cover for the channel 20.1.

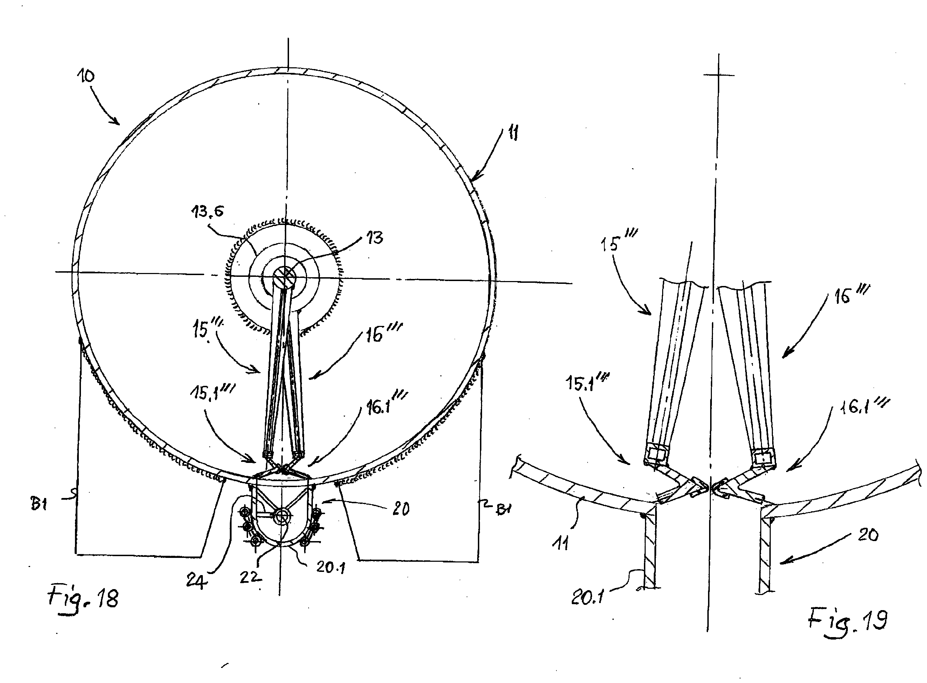

### A further variant or an embodiment according to figures 18 and 19

In the present variant of an embodiment, the linear brushing organs are indicated by the reference numbers 15.1"' and 16.1"' respectively, and are integral with spatial frames indicated by the numbers 15"' and 16"' respectively. These are sliding brushing organs. Said brushing organs are formed of metal profiles with a substantially "L"-shaped cross section, and are mutually arranged so that, in the end oscillation position towards the bottom of said frames, as illustrated in figures 18, 19, the intermediate portions of said linear organs 15.1"', 16.1"' are in mutual contact, while the organs are arranged so as to cover the bottom channel 20.1 of the autoclave 10, in the manner of a channel cover.

Otherwise, please refer to the preceding description.

### Another variant of the apparatus 10 according to the invention

As illustrated by way of example with reference to the apparatus 10, said mobile dragging means are oscillating with respect to an axis (axis of shaft 13) extending in an essentially horizontal direction along said side wall 11 of said autoclave 10 and comprise respective independent dragging organs (i.e. two planar frames 15, 16), one for each of two opposing inner surfaces of the side wall 11 of the autoclave. Furthermore, said mobile dragging means, in particular the respective independent dragging organs (i.e. two planar frames 15, 16) are moved, by means of said control means, in mutually convergent directions, at least during the lees sedimentation operation, from the top to the bottom only, simultaneously along said opposing inner surfaces of the side wall of the autoclave.

Alternatively, as can be easily understood, said independent dragging organs, i.e. for example the two planar frames 15, 16, of said mobile dragging means can be stably connected to one another, so as to form an operating unit with two dragging organs mutually spaced from one another by a fixed mutual angular distance with respect to the common axis of rotation (axis of shaft 13). This connection can be achieved using structural means or functional means for directing the respective control means.

In this way, the sedimentation phase, for example, comprises at least one operation wherein said independent dragging organs, 15, 16, are moved "in tandem", by means of said control means, from the top to the bottom only, simultaneously along respective adjacent inner surfaces of the side wall, for example, towards said bottom zone of the autoclave.

It will be noted in particular that the circumference arc, corresponding to this fixed mutual angular distance between said independent dragging organs, subtends a chord of a length slightly greater than the width of said bottom zone, or of said channel provided in the bottom zone of the autoclave.

Therefore, by means of the appropriate rotation of said first dragging means around said axis, it is possible to arrange said two independent dragging organs on either side and along opposing sides of said bottom zone or said channel. As explained above, said independent dragging organs are provided with respective covering means configured to overlie said bottom zone or said channel, as a top closing cover for said bottom zone or said channel.

Furthermore, the autoclave 10 comprises refrigeration means 30 for the bottom 20 of the autoclave (Figures 1, 3, 5, 16, 17). Said refrigeration means 30 comprise, for example, a fluid compression-type refrigeration circuit 31, wherein the evaporation of a refrigerating fluid takes place inside the circuit, particularly in a heat exchanger. In particular, the pipes 32 of said refrigeration means 30, through which the refrigerating fluid flows, are placed externally to and in longitudinal contact with the outer surface of the bottom 20.

The reference letters VS in the drawing indicate a discharge valve provided in the channel 20.1 of the autoclave 10.

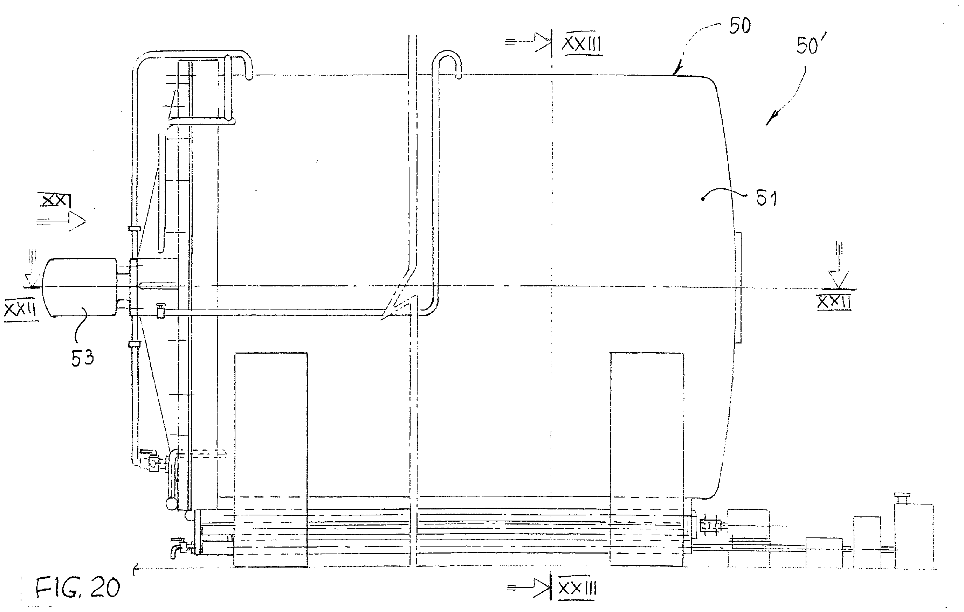

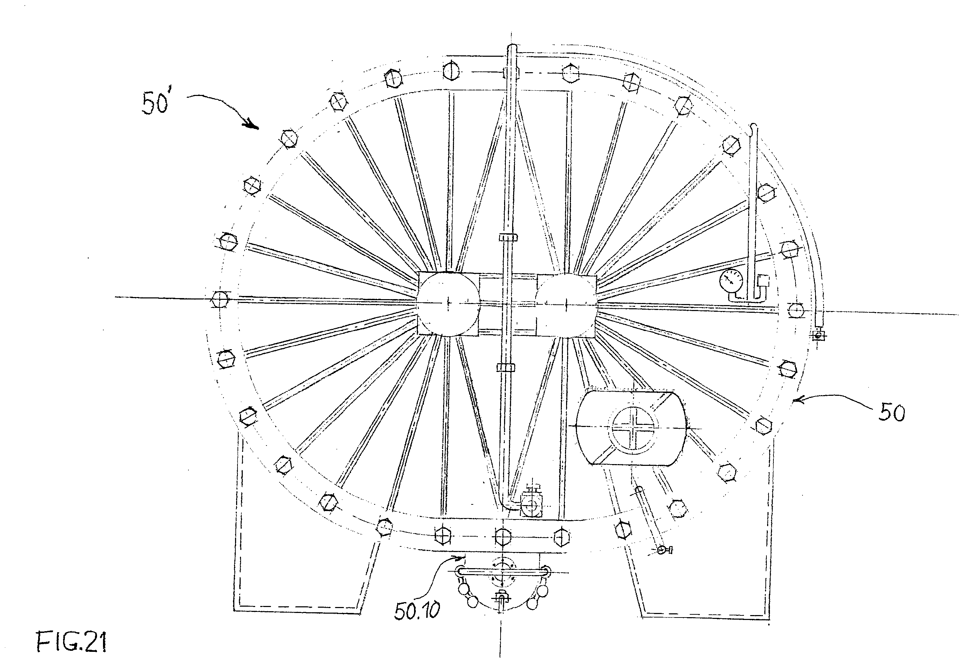

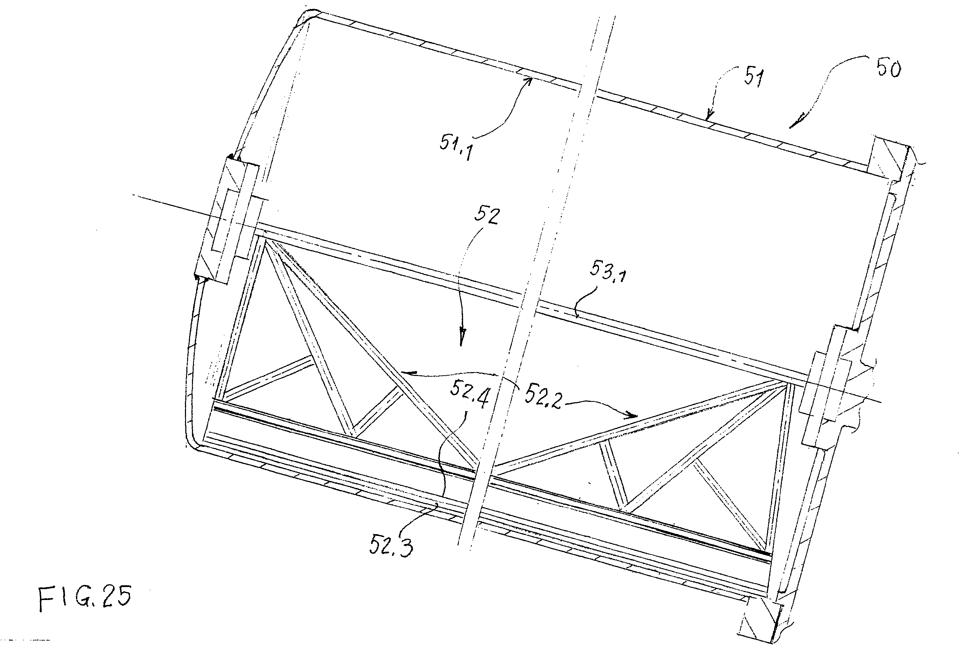

### Second example of an embodiment of the apparatus according to the invention (figures 20 to 25)

The apparatus according to the present second embodiment is indicated as a whole by the reference number 50' and it is described only in those aspects that differ from those of the first example of an embodiment of the apparatus according to the invention.

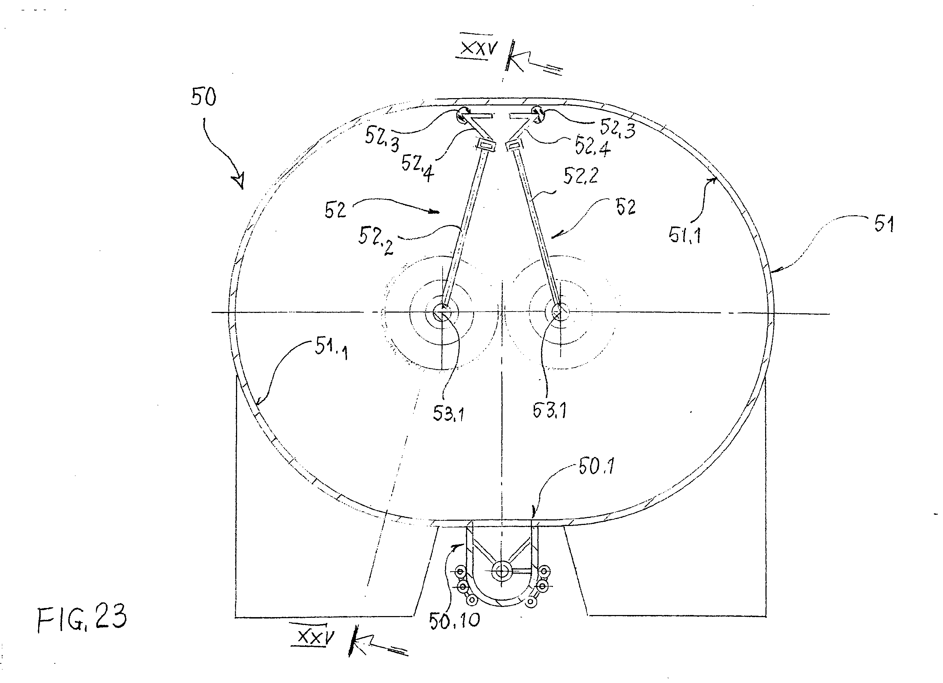

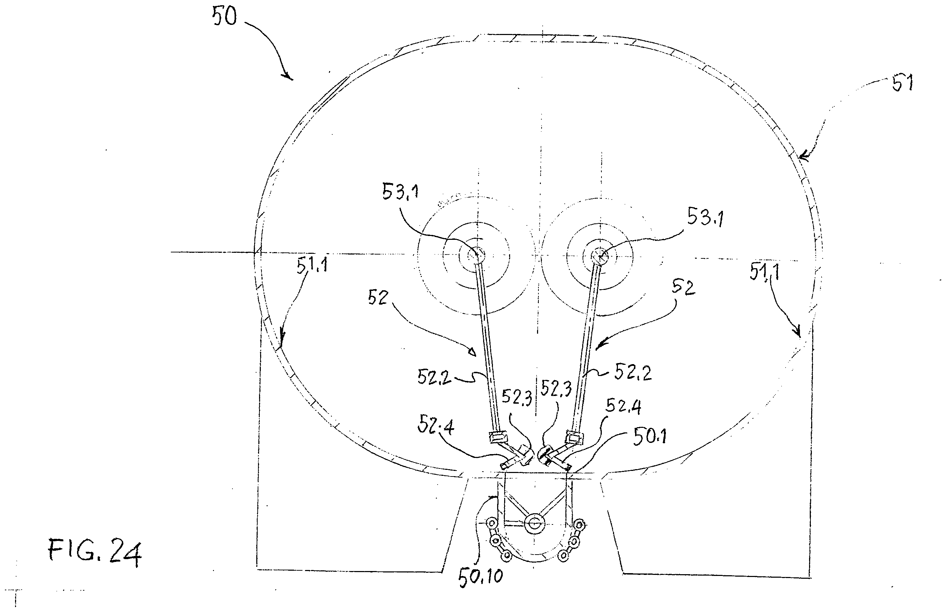

Said apparatus 50' is intended for the production of fermented or re-fermented beverages, with or without the presence of carbon dioxide, using the procedure described above and thus claimed. Said apparatus 50' comprises an autoclave 50 extending in an essentially horizontal direction, the side wall of which 51 has two opposing wall parts 51.1, with curved inner surfaces, and an internal bottom zone 50.1 below said two wall parts 51.1, wherein are performed at least the operations of filling the autoclave at least partially with fermentable liquid, fermentation or refermentation of said liquid and sedimentation of so-called lees. Said autoclave 50 essentially comprises:
- first mobile lees dragging means, inside said autoclave 50 and indicated as a whole by the reference number 52 (figure 23, 24), which are configured to drag at least one part of the lees inside said autoclave, from the top towards the bottom only (at least during the lees sedimentation phase), simultaneously along said curved inner surfaces 51.1 of said two side wall parts 51, towards said internal bottom zone 50.1 of the autoclave 50, and
- first control means 53 for the movement of said first mobile dragging means 52, configured to move said mobile means 52 of dragging at least part of the lees, from the top to the bottom only (at least during the lees sedimentation phase), simultaneously along said curved inner surfaces 51.1 of said two side wall parts 51 towards said bottom zone 50.1 of the autoclave 50.

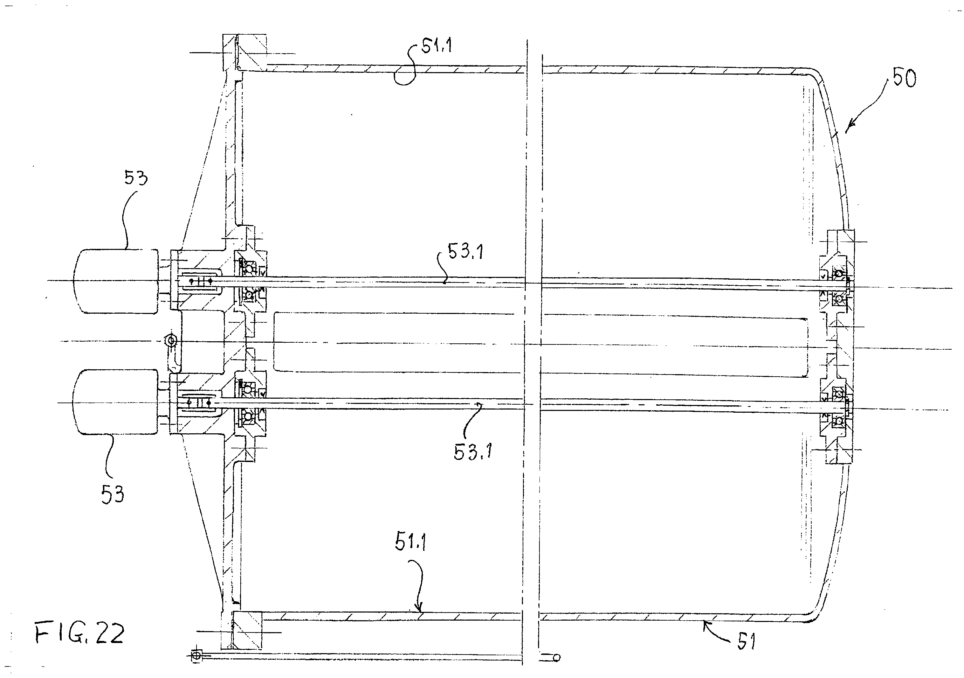

In the example shown, said control means 53 comprise two separate electric motors, for example with an inverter, the respective output shaft of which is placed on a corresponding axis of the autoclave 50 and rotates integrally with a respective shaft 53.1 (figure 22) extending along a corresponding axis of the autoclave and supported on the inside thereof with watertight support means. In a variant, a single electric motor with a suitable mechanical transmission can be used.

Each shaft 53.1 is firmly connected to a respective planar frame 52.2 projecting in a radial direction from said shaft and extending substantially for the entire length of a corresponding inner surface 51.1 of the wall 51 of the autoclave 50. Each frame 52.2, along its free end area, supports a corresponding brushing organ 52.3, arranged almost grazing, respectively sliding with respect to one of said corresponding curved inner surfaces 51.1 of the side wall 51 of said autoclave 50.

Each motor 53, by means of the corresponding shaft 53.1, controls the angular oscillation of the respective first mobile means of dragging the lees (frame 52.2 and brushing organ 52.3) around the relative axis of the autoclave, with variable angular amplitudes of up to more than 180°.

It will also be noted that in the present example of an embodiment of the invention and with reference to the refinement phase performed in the autoclave 50:
- said first mobile dragging means 52 are configured to drag at least one part of the lees inside said autoclave, from the bottom towards the top, simultaneously along said curved inner surfaces 51.1 of said side wall 51, and
- said first control means 53 for the movement of said first mobile dragging means 52 are configured to move said mobile dragging means, from the bottom towards the top, simultaneously along said curved inner surfaces 51.1 of said at least two side wall parts.

Furthermore, said first control means 53, 53.1 are configured to move said first dragging means 52 in mutually convergent directions at least during the lees dragging operation (for example during the sedimentation phase), from the top to the bottom only, simultaneously along said curved inner surfaces 51.1 of said two opposing wall parts 51.1 of said side wall 51 of the autoclave 50.

Furthermore, said respective dragging organs 52.2 of said first dragging means 52 are provided with covering means 52.4 (figure 23), which, when said dragging organs 52.2 are arranged respectively on either side and along opposing sides of said bottom zone 50.1, they overlie the zone 50.1 to form a top closing cover for said bottom zone (figure 24).

It will be noted that, as in the first example of an embodiment of the invention, a longitudinal channel 50.10 is provided in said bottom zone 50.1 of the autoclave 50, very similar to the channel 20.1 of the autoclave 50.

Compared to said channel 50.10, second lees dragging means are provided, with respective second translation control means, in an arrangement very similar to that described with reference to the afore-mentioned first embodiment of the invention. No further description is given, therefore, of said second dragging means and respective second control means.

### Use of the autoclave 10 to actuate the procedure for the production of fermented or re-fermented beverages, with or without the presence of carbon dioxide according to the invention

With reference to the description provided above, the autoclave 10, with a horizontal axis, is provided with a continuous longitudinal channel 20.1 for collecting lees, open at the top and forming the bottom of the autoclave.

Furthermore, as is apparent from the previous description, the autoclave 10 is fitted with a twin dragging/mixing system. In particular, the autoclave 10 comprises:
a) an arrangement comprising: reversible gear motors 14.1, 14.2, shaft 13, second sleeves 13.5, 13.6, with relative transmissions, planar frames 15, 16; 15"', 16"' and linear brushing organs 15.1-15.3, 16.1-16.3; 15.1"', 16.1"' (for sliding brushing) and, in a variant, linear brushing organs 15.1'-15.2', 16.1'-15.2' (for almost grazing brushing), and
b) an arrangement comprising: shaft 22, reversible gear motor 23, planar frame 24 and linear brushing organ 24.1-24.3 (for sliding brushing).

Arrangement b), when operational, enables the linear brushing organ 24.1-24.3 to be selectively oscillated in a clockwise or anti-clockwise direction, around the axis Y-Y near the inner surface of the wall of the bottom channel 20.1, carrying the lees deposited there into suspension.

Arrangement a), when operational, enables the linear brushing organs 15.1-15.3, 16.1-16.3 to be selectively oscillated in a clockwise or anti-clockwise direction, around the axis X-X, for example, thereby keeping the lees in suspension during fermentation (or re-fermentation) and/or refinement, and channel the lees towards the channel 20.1 at the end of the process.

It will be noted that the afore-mentioned dragging and mixing operations, actuated using the method and the apparatus according to the invention, involve at least part of the lees contained in the autoclave.

At least the motors in arrangement a) are fitted with an inverter, since during the phase wherein the lees are dragged towards the bottom, it is essential that the linear brushing organs make very slow movements.

Although it is not shown in the attached drawing, as an alternative to arrangement b), in relation to the bottom channel 20.1 of the autoclave 10 for mixing the lees, the autoclave is provided to be rotated around its horizontal axis X-X: one rotation of the autoclave, thru 180° for example, around said axis, carries the lees deposited there, for example in the bottom channel 20.1, into suspension, and they are then kept in movement by means of said arrangement a). A rotation in the opposite direction, or beyond 180°, returns the autoclave to its starting position.

Once the desired result from refinement has been obtained, one can proceed to separate the lees from the clear product.

This delicate phase of the procedure is performed as follows:
- periodical movement of the lees, by means of arrangement a) and/or b) is halted, positioning the linear brushing organs 15.1-15.3, 16.1-16.3 (15.1', 15.1"; 16.1', 16.1"; 15.1"', 16.1"') at the top of the autoclave 10 and the linear brushing organ 24.1 at the bottom of the bottom channel 20.1, thereby giving the lees time to be deposited on the bottom and on the walls of the autoclave 10. The bottom channel 20.1 is slightly inclined towards the VS discharge valve, to favor separation of the clear part from the cloudy part in the bottling phase. Furthermore, the inclination ensures that the tank is completely emptied when washing;
- once a compact sediment has been obtained on the bottom of the autoclave 10, the linear brushing organs 15.1-15.3, 16.1-16.3 (15.1', 15.1"; 16.1', 16.1"; 15.1"', 16.1"') are slowly oscillated around the axis X-X, so that they bring the deposit of lees towards the collection channel 20.1 on the bottom of the autoclave 10. This movement is performed several times, increasing each time the amplitude of the angular movement of the lees brushing organs around the axis X-X, starting from the top to the bottom, until the complete separation of the clear part of the liquid from the deposit.

To improve the compacting of the lees, the bottom 20 is equipped with said refrigeration means 30, 31, 32: these make it possible to freeze only the deposit, so as to have an additional guarantee as to its separation from the clear part;
- when all the deposit is in the bottom channel 20.1, the linear brushing organs 15.1", 16.1", 15.1"', 16.1"' (according to the variant shown in figures 12-15A, 18, 19) are positioned to form a cover, so as to isolate the clear part from the cloudy part.

The autoclave is provided with one or more valves (not shown) for drawing off the clear beverage during bottling.

Once a clear beverage has thus been obtained, one can proceed directly to isobaric bottling.

To be certain of the clarity of the beverage being bottled, a turbidimeter is installed at the outlet to the autoclave 10, connected in line to a solenoid valve that can block the flow of beverage in the event of cloudiness.

The apparatus object of the present invention makes it possible to actuate - simply, safely and effectively - the method specified above and subject-matter of the following claims.

As is apparent from the above, the present invention allows the objects specified in the introduction to be achieved in a simple and advantageous manner.

In particular, it achieves:
- more effective collection of lees thanks to the dragging system, which makes it possible to drag the lees from the top to the bottom only, thereby avoiding carrying the lees back into suspension, and at the same time along the inner surface of the autoclave towards the bottom zone, for example shaped as a channel;
- dragging the lees into the channel, for example, where they can be isolated from the clear beverage by means of the dragging means themselves, which, when they are positioned on the bottom, act as a closing cover. The invention makes it possible to obtain a fermented or re-fermented beverage, with or without the presence of carbon dioxide, which is clear and isolated from the lees, in the same processing autoclave. Thanks to the cover means, it is also possible to make pre-bottling additions to the autoclave without carrying the lees into suspension, and to bottle the beverage directly.

## Claims

1. Apparatus (10', 50') for the production of fermented or re-fermented beverages, with or without the presence of carbon dioxide, comprising an autoclave (10, 50) extending in a horizontal direction, which includes a front cover (12.1), a back wall (12.2), a side wall (11,51) with a horizontal axis (X-X) and a curved inner surface including two side surface parts and an internal bottom zone (20, 20.1, 50.1, 50.10) below said two side surface parts, said apparatus (10', 50') being provided for performing at least the operations of filling the autoclave (10,50) at least partially with fermentable liquid, fermentation or re-fermentation of said liquid and sedimentation of so-called lees, said apparatus (10', 50') further comprising:
- first control means comprising:
- an axial shaft (13) rotatingly supported with respect to said cover (12.1) and to said back wall (12.2) by means of respective first supporting and sealing axial sleeves (13.1,13.2) and provided with corresponding bearings and sealing means, and
- a pair of second supporting and sealing axial sleeves (13.5, 13.6) arranged on said first shaft (13) and partially inside said first axial sleeves (13.1,13.2), respectively, said second sleeves (13.5,13.6) being fitted in a rotating manner with respect to said first axial shaft (13) and provided with corresponding bearings and sealing means
or, in place of said axial shaft (13) and said second sleeves (13.5,13.6), first and second axial shafts (53.1) rotatingly supported with respect to said cover (12.1) and to said back wall (12.2) around respective axes with watertight support means,
- motor means (14.1, 14.2, 53) configured for driving said axial shaft (13) and said second sleeves (13.5,13.6) or for driving said first and second axial shafts (53.1),
- first mobile dragging means, inside said autoclave (10, 50), configured to drag at least one part of the lees inside said autoclave, comprising:
- a first fixed, planar, rigid frame (15, 15', 15"', 52.2), contained in a plane passing through the axis (X-X) and extending radially to the inner surface of the side wall (11,51) of the autoclave (10, 50) and a second fixed, planar rigid frame (16, 16', 16'", 52.2), contained in a plane passing through the axis (X-X) and extending radially to the inner surface of the side wall (11,51) of the autoclave (10, 50), respectively supported by said axial shaft (13) and said second sleeves (13.5, 13.6), or by said first and second axial shafts (53.1),
- a first linear brushing organ (15.1, 15.1', 15.1'", 52.3) supported by said first rigid frame (15, 15', 15'", 52.2) and a second linear brushing organ (16.1, 16.1', 16.1"', 52.3) supported by said second rigid frame (16, 16', 16'", 52.2),
said first and second linear brushing organs (15.1, 15.1', 15.1'", 16.1, 16.1', 16.1'", 52.3) extending substantially for the entire length of the side wall (11,51) and being configured for dragging at least one part of the lees inside said autoclave (10,50), from said two side surface parts of the autoclave inner surface, respectively,
- said first control means being configured to move, at least during said lees sedimentation phase, said mobile dragging means of at least part of the lees, from the top to the bottom only, simultaneously along said curved inner surfaces of said at least two side surface parts towards said bottom zone of the autoclave.

2. Apparatus (10', 50') according to claim 1, **characterized in that** it comprises, in said internal bottom zone (20, 50.1), a channel (20.1, 50.10) extending substantially along the entire length of said side wall (11, 51) and open towards the inside of the autoclave (10, 50), for gathering at least part of the dragged lees, from the top to the bottom only, by means of said mobile dragging means simultaneously along said curved inner surfaces of said at least two side wall parts.

3. Apparatus (10', 50') according to claim 2, **characterized in that** said channel (20.1, 50.10) includes second dragging means (22, 22.1, 22.2, 24, 24.1, 24.2, 24.3) for moving at least part of the lees in said channel (20.1, 50.10) and second control means (23, 23.1) for driving said second dragging means (22, 22.1, 22.2, 24, 24.1, 24.2, 24.3).

4. Apparatus (10') according to claim 1, **characterized in that** said first and second brushing organs (15.1, 15.1', 16.1, 16.1') respectively include a linear slat (15.2, 15.2', 16.2, 16.2') connected to the respective frame (15, 15', 16, 16') and a linear blade (15.3, 16.3)) or, in place of said linear blade (15.3, 16.3), a respective freely oscillating fin (15.1", 16.1") having an axis parallel to said axis (X-X), supported by the respective linear slat (15.2, 15.2', 16.2, 16.2') substantially for the entire length of the slat (15.2, 15.2', 16.2, 16.2').

5. Apparatus (10') according to claim 4, **characterized in that** each linear slat (15.2, 16.2) is connected to the respective frame (15, 16) in an oscillating manner (16.4) by means of a respective pair of coaxial end pins (15.4, 16.4), and is configured to assume an operating position for brushing at least part of a corresponding surface of said curved inner surface of said side wall (11), at least in the direction of movement of said first dragging means from the top towards the bottom, and automatically, respectively in a selective manner, a non-operational position in the direction of movement of said first dragging means from the bottom towards the top.

6. Apparatus (10', 50') according to claim 3, **characterized in that**:
said brushing organs (15.1', 15.1'", 16.1', 16.1'", 52.3) are provided with covering means (15.1", 16.1"; 15.1"', 16.1'", 52.4), configured to form a top closing cover for said channel (20.1, 50.10), when said brushing organs (15.1', 15.1'", 16.1', 16.1"', 52.3) are placed respectively on one part and on the other part and along opposite sides of said channel (20.1, 50.10).

7. Apparatus (10', 50') according to claim 6, **characterized in that**:
each linear slat (15.2', 16.2') supports a respective freely oscillating fin (15.1", 16.1") which is movable integrally with the respective frame (15', 16'), in such a way that when the linear slats (15.2', 16.2') are arranged on the inner surface of the side wall near the bottom channel (20,1), said oscillating fins (15.1", 16.1") are partially overturned by gravity with the respective free ends positioned inside said channel (20.1) and mutually juxtaposed against one another, thereby forming an upper closing cover for the channel (20.1).

8. Apparatus (10', 50') according to any of claims 1 to 7, **characterized in that** it comprises refrigeration means (30), placed along at least one part of said bottom zone (20, 50.1) of the autoclave (10,50) and configured for providing circulation of a refrigerating fluid and thermal conditioning of at least one part of the lees in said bottom zone (20, 50.1) of the autoclave (10, 50) until the at least partial solidification of the lees in said bottom zone (20, 50.1) of the autoclave (10,50).

9. Apparatus according to any of the claims from 1 to 8, **characterized in that** it comprises
- means for supporting said autoclave (10,50) in a rotating manner around a horizontal axis;
- means for controlling the rotation of said autoclave (10,50) around said horizontal axis,
- so that, by means of said rotation control means, said autoclave (10,50) is rotatable around said axis, mixing said lees in said liquid inside the autoclave.

10. Procedure for the production of fermented or re-fermented beverages, with or without the presence of carbon dioxide, with the use of an apparatus (10', 50') according to any of claims 1-9.

## Patentansprüche

1. Vorrichtung (10', 50) zur Herstellung von fermentierten oder erneut fermentierten Getränken mit oder ohne Anwesenheit von Kohlendioxid, die einen in einer horizontalen Richtung sich erstreckenden Autoklav (10, 50) aufweist, der einen vorderen Deckel (12.1), eine Rückwand (12.2), eine Seitenwand (11, 51) mit einer horizontalen Achse (X-X) und einer gewölbten Innenfläche aufweist, die zwei seitliche Flächenteile und einen inneren Bodenbereich (20, 20.1, 50.1, 50.10) unterhalb der zwei seitlichen Flächenteile einschließt, wobei die Vorrichtung (10', 50') vorgesehen ist, um mindestens die Arbeitsgänge des Füllens des Autoklavs (10, 50) zumindest teilweise mit gärungsfähiger Flüssigkeit, der Gärung oder Wiedergärung der Flüssigkeit und Sedimentation von so genanntem Trub durchzuführen, wobei die Vorrichtung (10', 50') des Weiteren aufweist:
- eine erste Steuereinrichtung, umfassend:
- eine Axialwelle (13), die relativ zum Deckel (12.1) und zur Rückwand (12.2) mittels jeweiliger erster axialer Trag- und Dichtungshülsen (13.1, 13.2) drehbar gelagert und mit entsprechenden Lagern und Dichtungsmitteln versehen ist, und
- ein Paar zweiter axialer Trag- und Dichtungshülsen (13.5, 13.6), die auf der ersten Welle (13) bzw. teilweise im Innern der ersten axialen Hülsen (13.1, 13.2) angeordnet sind, wobei die zweiten Hülsen (13.5, 13.6) relativ zu der ersten Axialwelle (13) rotierend eingebaut und mit entsprechenden Lagern und Dichtungsmitteln versehen sind,
oder anstelle der Axialwelle (13) und der zweiten Hülsen (13.5, 13.6), erste und zweite Axialwellen (53.1), die relativ zum Deckel (12.1) und zur Rückwand (12.2) drehbar um jeweilige Achsen mit wasserdichten Halterungseinrichtungen gelagert sind,
- eine Motoreinrichtung (14.1, 14.2, 53), die zum Antrieb der Axialwelle (13) und der zweiten Hülsen (13.5, 13.6) oder zum Antrieb der ersten und zweiten Axialwellen (53.1) gestaltet ist,
- eine erste bewegliche Mitnehmeinrichtung im Innern des Autoklavs (10, 50), die zum Mitnehmen mindestens eines Teils des Trubes im Innern des Autoklavs gestaltet ist, umfassend:
- einen ersten feststehenden, ebenen, starren Rahmen (15, 15', 15"', 52.2), der in einer durch die Achse (X-X) verlaufenden Ebene aufgenommen ist und sich radial zur Innenfläche der Seitenwand (11, 51) des Autoklavs (10, 50) erstreckt, und einen zweiten feststehenden, ebenen, starren Rahmen (16, 16', 16'", 52.2), der in einer Ebene durch die Achse (X-X) verlaufenden Ebene aufgenommen ist und sich radial zur Innenfläche der Seitenwand (11, 51) des Autoklavs (10, 50) erstreckt, jeweils durch die Axialwelle (13) und die zweiten Hülsen (13.5, 13.6) oder durch die erste und zweite Axialwelle (53.1) unterstützt,
- ein erstes geradliniges Bürstenmittel (15.1, 15.1', 15.1''', 52.3), das durch den ersten starren Rahmen (15, 15', 15'", 52.2) abgestützt wird, und ein zweites geradliniges Bürstenmittel (16.1, 16.1', 16.1''', 52.3), das durch den zweiten starren Rahmen (16, 16', 16.1''', 52.2) abgestützt wird,
wobei das erste und das zweite geradlinige Bürstenmittel (15.1, 15.1', 15.1''', 16.1, 16.1', 16.1''', 52.3) sich im Wesentlichen über die gesamte Länge der Seitenwand (11, 51) erstrecken und zum Mitnehmen mindestens eines Teils des Trubes im Innern des Autoklavs (10, 50) jeweils von den zwei seitlichen Flächenteile der Innenfläche des Autoklavs gestaltet sind,
- die erste Steuereinrichtung so gestaltet ist, dass die bewegliche Mitnehmeinrichtung zumindest während der Phase der Trubsedimentation mindestens einen Teil des Trubes nur von oben nach unten, gleichzeitig entlang der gewölbten Innenflächen der mindestens zwei seitlichen Flächenteilen zum Bodenbereich des Autoklavs hin, bewegt.

2. Vorrichtung (10', 50) nach Anspruch 1, **dadurch gekennzeichnet, dass** sie im inneren Bodenbereich (20, 50.1) einen Kanal (20.1, 50.10) aufweist, der sich im Wesentlichen entlang der gesamten Länge der Seitenwand (11, 51) und offen zur Innenseite des Autoklavs (10, 50) erstreckt, um zumindest einen Teil von mitgenommenem Trub nur von oben nach unten durch die bewegliche Mitnehmeinrichtung gleichzeitig entlang der gewölbten Innenflächen der mindestens zwei seitlichen Wandteile zu gewinnen.

3. Vorrichtung (10', 50') nach Anspruch 2, **dadurch gekennzeichnet, dass** der Kanal (20.1, 50.10) eine zweite Mitnehmeinrichtung (22, 22.1, 22.2, 24, 24.1, 24.2, 24.3) zur Bewegung von mindestens einem Teil des Trubes in dem Kanal (20.1, 50.10) und eine zweite Steuereinrichtung (23, 23.1) zum Antrieb der zweiten Mitnehmeinrichtung (22, 22.1, 22.2, 24, 24.1, 24.2, 24.3) einschließt.

4. Vorrichtung (10') nach Anspruch 1, **dadurch gekennzeichnet, dass** das erste und das zweite Bürstenmittel (15.1, 15.1', 16.1, 16.1') jeweils einen mit dem jeweiligen Rahmen (15, 15', 16, 16') verbundenen geradlinigen Stab (15.2, 15.2', 16.2, 16.2') und eine geradlinige Klinge (15.3, 16.3) oder, anstelle der geradlinigen Klinge (15.3, 16.3), eine jeweilige frei schwingende Strebe (15.1'', 16.1'') mit einer Achse parallel zur Achse (X-X) einschließen, die durch den jeweiligen geradlinigen Stab (15.2, 15.2', 16.2, 16.2') im Wesentlichen entlang der gesamten Länge des Stabs (15.2, 15.2', 16.2, 16.2') unterstützt wird.

5. Vorrichtung (10') nach Anspruch 4, **dadurch gekennzeichnet, dass** jeder geradlinige Stab (15.2, 16.2) mit dem jeweiligen Rahmen (15, 16) in schwingender Weise (16.4) durch ein jeweiliges Paar koaxialer Endbolzen (15.4, 16.4) verbunden und ausgestaltet ist, um eine Betriebsstellung zum Bürsten von mindestens einem Teil einer entsprechenden Oberfläche der gewölbten Innenfläche der Seitenwand (11), zumindest in Bewegungsrichtung der ersten Mitnehmeinrichtung von oben nach unten, und automatisch, jeweils in selektiver Weise, eine Stellung im Ruhezustand in Bewegungsrichtung der ersten Mitnehmeinrichtung von unten nach oben anzunehmen.

6. Vorrichtung (10', 50') nach Anspruch 3, **dadurch gekennzeichnet, dass**:
die Bürstenmittel (15.1', 15.1''', 16.1', 16.1''', 52.3) mit einer Abdeckeinrichtung (15.1'', 16.1''; 15.1''', 16.1''', 52.4) versehen sind, die gestaltet ist, um eine obere schließende Abdeckung für den Kanal (20.1, 50.10) zu bilden, wenn die Bürstenmittel (15.1', 15.1''', 16.1', 16.1''', 52.3) jeweils auf dem einen Teil oder auf dem anderen Teil und längs gegenüberliegender Seiten des Kanals (20.1, 50.10) angeordnet sind.

7. Vorrichtung (10', 50') nach Anspruch 6, **dadurch gekennzeichnet, dass**:
jeder geradlinige Stab (15.2', 16.2') eine jeweilige frei schwingende Strebe (15.1'', 16.1'') trägt, die mit dem jeweiligen Rahmen (15', 16') ein Ganzes bildend bewegbar ist, derart, dass, wenn die geradlinigen Stäbe (15.2', 16.2') auf der Innenfläche der Seitenwand nahe des unteren Kanals (20.1) angeordnet sind, die schwingenden Streben (15.1'', 16.1'') durch Schwerkraft teilweise mit den jeweiligen freien Enden umgekippt werden, die im Innern des Kanals (20.1) angeordnet und wechselweise gegeneinander gelegt sind, wodurch eine obere schließende Abdeckung für den Kanal (20.1) gebildet wird.

8. Vorrichtung (10', 50') nach einem der Ansprüche 1 bis 7, **dadurch gekennzeichnet, dass** sie eine Kühleinrichtung (30) aufweist, die an mindestens einem Teil des Bodenbereichs (20, 50.1) des Autoklavs (10, 50) angeordnet und gestaltet ist, um Zirkulation eines Kühlfluides und thermische Konditionierung von mindestens einem Teil des Trubes im Bodenbereich (20, 50.1) des Autoklavs (10, 50) bis zur zumindest teilweisen Verfestigung des Trubes im Bodenbereich (20, 50.1) des Autoklavs (10, 50) zu bewirken.

9. Vorrichtung nach einem der Ansprüche von 1 bis 8, **dadurch gekennzeichnet, dass** sie aufweist
- eine Einrichtung zur Halterung des Autoklavs (10, 50) in rotierender Weise um eine horizontale Achse;
- eine Einrichtung zur Steuerung der Rotation des Autoklavs (10, 50) um die horizontale Achse,
- so dass der Autoklav (10, 50) durch die Rotationssteuereinrichtung um die Achse rotierbar ist, indem der Trub in der Flüssigkeit im Innern des Autoklavs gemischt wird.

10. Verfahren zur Herstellung von fermentierten und erneut fermentierten Getränken, mit oder ohne Vorhandensein von Kohlendioxid, unter der Verwendung einer Vorrichtung (10', 50') nach einem der Ansprüche 1 bis 9.

## Revendications

1. Appareil (10', 50') pour la production de boissons fermentées ou refermentées, en présence ou en l'absence de dioxyde de carbone, comprenant un autoclave (10, 50) s'étendant dans une direction horizontale, qui comporte un couvercle avant (12.1), une paroi arrière (12.2), une paroi latérale (11, 51) avec un axe horizontal (X-X) et une surface interne incurvée comportant deux parties de surface latérale et une zone inférieure interne (20, 20.1, 50.1, 50.10) en dessous desdites deux parties de surface latérale, ledit appareil (10', 50') étant prévu pour effectuer au moins les opérations de remplissage de l'autoclave (10, 50) au moins partiellement avec un liquide fermentescible, de fermentation ou de refermentation dudit liquide et de sédimentation de ce qu'on appelle les lies, ledit appareil (10', 50') comprenant en outre :
- des premiers moyens de commande comprenant :
- un arbre axial (13) supporté en rotation par rapport audit couvercle (12.1) et à ladite paroi arrière (12.2) au moyen de premiers manchons axiaux de support et d'étanchéité respectifs (13.1, 13.2) pourvus de paliers et de moyens d'étanchéité correspondants, et
- une paire de deuxièmes manchons axiaux de support et d'étanchéité (13.5, 13.6) agencés sur ledit premier arbre (13) et partiellement à l'intérieur desdits premiers manchons axiaux (13.1, 13.2), respectivement, lesdits deuxièmes manchons (13.5, 13.6) étant ajustés de manière rotative par rapport audit premier arbre axial (13) et pourvus de paliers et de moyens d'étanchéité correspondants ou, à la place dudit arbre axial (13) et desdits deuxièmes manchons (13.5, 13.6), des premier et deuxième arbres axiaux (53.1) supportés en rotation par rapport audit couvercle (12.1) et à ladite paroi arrière (12.2) autour d'axes respectifs avec des moyens de support étanches à l'eau,
- des moyens moteurs (14.1, 14.2, 53) configurés pour entraîner ledit arbre axial (13) et lesdits deuxièmes manchons (13.5, 13.6) ou pour entraîner lesdits premier et deuxième arbres axiaux (53.1),
- des premiers moyens de traînée mobiles, à l'intérieur dudit autoclave (10, 50), configurés pour traîner au moins une partie des lies à l'intérieur dudit autoclave, comprenant :
- un premier cadre rigide plan fixe (15, 15', 15"', 52.2), contenu dans un plan passant par l'axe (X-X) et s'étendant radialement vers la surface interne de la paroi latérale (11, 51) de l'autoclave (10, 50) et un deuxième cadre rigide plan fixe (16, 16', 16"', 52.2), contenu dans un plan passant par l'axe (X-X) et s'étendant radialement vers la surface interne de la paroi latérale (11, 51) de l'autoclave (10, 50), respectivement supportés par ledit arbre axial (13) et lesdits deuxièmes manchons (13.5, 13.6), ou par lesdits premier et deuxième arbres axiaux (53.1),
- un premier organe de brossage linéaire (15.1, 15.1', 15.1"', 52.3) supporté par ledit premier cadre rigide (15, 15', 15"', 52.2) et un deuxième organe de brossage linéaire (16.1, 16.1', 16.1'", 52.3) supporté par ledit deuxième cadre rigide (16, 16', 16"', 52.2),
lesdits premier et deuxième organes de brossage linéaires (15.1, 15.1', 15.1'", 16.1, 16.1', 16.1'", 52.3) s'étendant essentiellement sur toute la longueur de la paroi latérale (11, 51) et étant configurés pour traîner au moins une partie des lies à l'intérieur dudit autoclave (10, 50), à partir desdites deux parties de surface latérale de la surface interne d'autoclave, respectivement,
- lesdits premiers moyens de commande étant configurés pour déplacer, au moins pendant ladite phase de sédimentation de lies, lesdits moyens de traînée mobiles d'au moins une partie des lies, de haut en bas uniquement, simultanément le long desdites surfaces internes incurvées desdites au moins deux parties de surface latérale vers ladite zone inférieure de l'autoclave.

2. Appareil (10', 50') selon la revendication 1, **caractérisé en ce qu'**il comprend, dans ladite zone inférieure interne (20, 50.1), un canal (20.1, 50.10) s'étendant sensiblement sur toute la longueur de ladite paroi latérale (11, 51) et ouvert vers l'intérieur de l'autoclave (10, 50), pour recueillir au moins une partie des lies traînées, de haut en bas uniquement, au moyen desdits moyens de traînée mobiles simultanément le long desdites surfaces internes incurvées desdites au moins deux parties de paroi latérale.

3. Appareil (10', 50') selon la revendication 2, **caractérisé en ce que** ledit canal (20.1, 50.10) comporte des deuxièmes moyens de traînée (22, 22.1, 22.2, 24, 24.1, 24.2, 24.3) pour déplacer au moins une partie des lies dans ledit canal (20.1, 50.10) et des deuxièmes moyens de commande (23, 23.1) pour entraîner lesdits deuxièmes moyens de traînée (22, 22.1, 22.2, 24, 24.1, 24.2, 24.3).

4. Appareil (10') selon la revendication 1, **caractérisé en ce que** lesdits premier et deuxième organes de brossage (15.1, 15.1', 16.1, 16.1') comportent respectivement une latte linéaire (15.2, 15.2', 16.2, 16.2') reliée au cadre respectif (15, 15', 16, 16') et une lame linéaire (15.3, 16.3) ou, à la place de ladite lame linéaire (15.3, 16.3), une ailette à oscillation libre respective (15.1", 16.1") ayant un axe parallèle audit axe (X-X), supportée par la latte linéaire respective (15.2, 15.2', 16.2, 16.2') essentiellement sur toute la longueur de la latte (15.2, 15.2', 16.2, 16.2').

5. Appareil (10') selon la revendication 4, **caractérisé en ce que** chaque latte linéaire (15.2, 16.2) est reliée au cadre respectif (15, 16) de manière oscillante (16.4) au moyen d'une paire respective de broches d'extrémité coaxiales (15.4, 16.4), et est configurée pour adopter une position de fonctionnement pour brosser au moins une partie d'une surface correspondante de ladite surface interne incurvée de ladite paroi latérale (11), au moins dans la direction de mouvement desdits premiers moyens de traînée du haut vers le bas, et automatiquement, respectivement de manière sélective, une position non fonctionnelle dans la direction de mouvement desdits premiers moyens de traînée du bas vers le haut.

6. Appareil (10', 50') selon la revendication 3, **caractérisé en ce que** :
lesdits organes de brossage (15.1', 15.1'", 16.1', 16.1'", 52.3) sont pourvus de moyens de couverture (15.1", 16.1" ; 15.1'", 16.1'", 52.4), configurés pour former un couvercle de fermeture supérieur pour ledit canal (20.1, 50.10), lorsque lesdits organes de brossage (15.1', 15.1'", 16.1', 16.1'", 52.3) sont placés respectivement de part et d'autre et le long des côtés opposés dudit canal (20.1, 50.10).

7. Appareil (10', 50') selon la revendication 6, **caractérisé en ce que** :
chaque latte linéaire (15.2', 16.2') supporte une ailette à oscillation libre respective (15.1", 16.1") qui peut se déplacer d'un seul tenant avec le cadre respectif (15', 16'), de sorte que, lorsque les lattes linéaires (15.2', 16.2') sont agencées sur la surface interne de la paroi latérale près du canal inférieur (20,1), lesdites ailettes oscillantes (15.1", 16.1") soient partiellement retournées par gravité avec les extrémités libres respectives positionnées à l'intérieur dudit canal (20.1) et mutuellement juxtaposées les unes aux autres, formant ainsi un couvercle de fermeture supérieur pour le canal (20.1).

8. Appareil (10', 50') selon l'une des revendications 1 à 7, **caractérisé en ce qu'**il comprend des moyens de réfrigération (30), placés le long d'au moins une partie de ladite zone inférieure (20, 50.1) de l'autoclave (10, 50) et configurés pour assurer la circulation d'un fluide frigorigène et le conditionnement thermique d'au moins une partie des lies dans ladite zone inférieure (20, 50.1) de l'autoclave (10, 50) jusqu'à la solidification au moins partielle des lies dans ladite zone inférieure (20, 50.1) de l'autoclave (10, 50).

9. Appareil selon l'une des revendications 1 à 8, **caractérisé en ce qu'**il comprend
- des moyens pour supporter ledit autoclave (10, 50) de manière rotative autour d'un axe horizontal ;
- des moyens pour commander la rotation dudit autoclave (10, 50) autour dudit axe horizontal,
- de sorte que, au moyen desdits moyens de commande de rotation, ledit autoclave (10, 50) puisse tourner autour dudit axe, mélangeant lesdites lies dans ledit liquide à l'intérieur de l'autoclave.

10. Procédure pour la production de boissons fermentées ou refermentées, en présence ou en l'absence de dioxyde de carbone, en utilisant un appareil (10', 50') selon l'une des revendications 1 à 9.
